# EUROPEAN PATENT SPECIFICATION

(11) **EP 1 366 358 B1**
(45) Date of publication and mention of the grant of the patent: **27.05.2015**
(21) Application number: 02702530.3
(22) Date of filing: 08.03.2002
(51) Int. Cl.: G01N 30/60, B01D 15/22

(54) **CHROMATOGRAPHY DEVICE**
CHROMATOGRAPHIEEINRICHTUNG
DISPOSITIF DE CHROMATOGRAPHIE

(30) Priority: 09.03.2001 GB 0105840; 09.03.2001 US 803487
(43) Date of publication of application: 03.12.2003
(73) Proprietor: GE Healthcare Bio-Sciences AB, 75184 Uppsala (SE)
(72) Inventor: PICHL, Ulf, S-751 84 Uppsala (SE); DAVIS, John, S-751 84 Uppsala (SE)
(74) Representative: Cavill, Ross David
(86) International application number: PCT/GB2002/000950
(87) International publication number: WO 2002/073185

(56) References cited:
- EP-A- 0 108 242
- EP-A- 0 476 997
- DE-A- 4 309 798
- SE-B- 459 396
- US-B1- 6 280 616

## Description

### Field of the Invention

The present invention relates to chromatography columns and nets for such columns.

### Prior Art

Chromatography columns often contain a net to prevent media from escaping from the end cells which are used for radially distributing the fluid flowing in from a central inlet at one end of the column and for radially collecting the fluid for subsequent outputting from a central outlet at the opposite end of the column. These nets extend across substantially the whole internal diameter of the column. In the prior art the nets have been made of polymer materials and have been attached (with a supporting backing plate if required) to the central inlet resp. central outlet by means of screws or bolts. The screws or bolts are mounted with their heads on the side of the net facing away from the inlet, resp. outlet, and they pass through suitably sized holes in the net and are screwed into suitably threaded axial holes in the wall of the central inlet resp. outlet.

Alternatively nets have been attached by being mounted on a central inlet or outlet tubular port provided with an internal thread and a stop flange positioned on the outside of the port at a distance from the end where the net is to be mounted which is less than the thickness of the net. The net is then positioned against the flange with the end of the port extending into a central opening in the net. The net is held in place by a threaded end piece which has a tubular portion provided with a thread adapted to mate with the thread on the inside of the port, and a flange at one end which pushes the net against the flange on the port when the end piece is screwed up into the port.

A problem with these mounting methods is that once the net is mounted in a chromatography column then access to the end piece or mounting bolts is limited. When it becomes necessary to detach the tubular port from the net, it is necessary to dismantle the column in order to be able to unscrew the end piece or mounting screws from inside the column. This has the disadvantages that it is time consuming and, for reasons of hygiene, it is undesirable to dismantle a column. Alternatively, it is possible necessary to provide a special tool which can be inserted through the tubular port from the end outside the chromatography column and then expanded laterally in order to grip the flange or in some other way become attached to the flange in order to permit the flange and end piece to be rotated. This has the disadvantage that it is difficult for an operator to see the tool when manoeuvring it into place and it is possible for him to inadvertently damage the end piece, net or port while trying to get the tool to grip the end piece.

A further problem is that the heads of the mounting screws, resp. the end pieces, project into the bed media and interfere with the packing of the bed media.

Additionally, in order to prevent unwanted leakage between the central port and the net, the join between the net and a central port is normally provided with sealing means such as O-rings or gaskets. Similarly, at the outer circumference of the net, in order to prevent leakage between the net and the wall of the column or distributor cell, sealing means such as O-rings or gaskets are provided between the net and wall and/or distributor cell. A problem with such an arrangement is that, if the net is made of woven stainless steel, or sintered metal, it is very difficult to obtain a good seal, as the net surface is uneven and the O-ring or gasket cannot deform sufficiently to fill all the irregularities in the surface of the net. This is particularly problematic if the bed particles used in the column are less than 30 micrometers in diameter or length as they are able to pass through gaps between the O-ring or gasket and the net. This leads to a loss of bed media through these gaps and a loss of column performance.

EP-A-0476997 discloses an end cell for a chromatography column which has an integral screen formed of a woven mesh of fibres. A peripheral ring of plastic material is injection moulded to the perimeter of the mesh and secured to the end cell, preferably by vibration welding.

SE-B-459396 discloses a filter for a chromatographic separation column which comprises a moulded plastic ring having a filter fabric moulded to the ring through holes along the ring periphery which are pervious to the ring plastic mass.

DE-A-4309798 discloses a liquid chromatography cartridge having an end piece wherein a sieve element provided in a recess of the end piece is fixed therein by beading the outer edge of the end piece.

### Summary of the Invention

According to the present invention, at least some of the problems with the prior art are solved by means of a device having the features present in claim 1. Further advantages are obtained by the features mentioned in the dependent claims. The present invention will be illustrated below by means of descriptions of non-limiting examples of embodiments and the following figures.

### Brief Description of the Figures

Figure 1a) shows schematically a cross-section through a prior art chromatography column;
Figure 1b) shows schematically an enlarged view of the central net mounting of the prior art column of figure 1a);
Figure 2a) shows schematically a cross-section through an embodiment of a chromatography column in accordance with the present invention;
Figure 2b) shows schematically an enlarged view of a first embodiment of the central net mounting of the column of figure 2a);
Figure 2c) shows an enlarged view of a second embodiment of a central net mounting in accordance with the present invention;
Figure 3a) shows schematically a cross-section of a chromatography column which is not in accordance with the present invention;
Figure 3b) shows an enlarged view of the peripheral net mounting of the column of figure 3a); and,
Figure 4 shows a third embodiment of the present invention.

### Detailed Description of Embodiments Illustrating the Invention

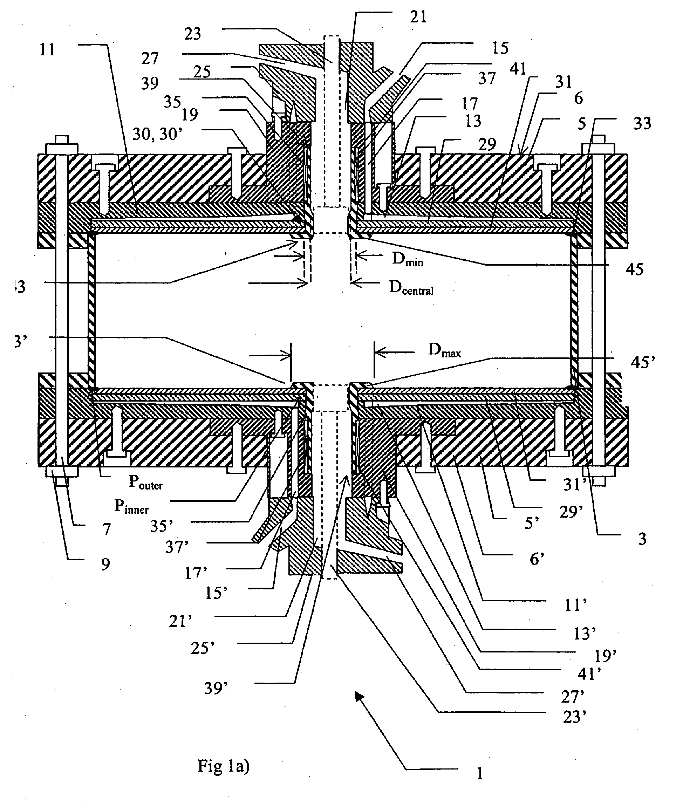

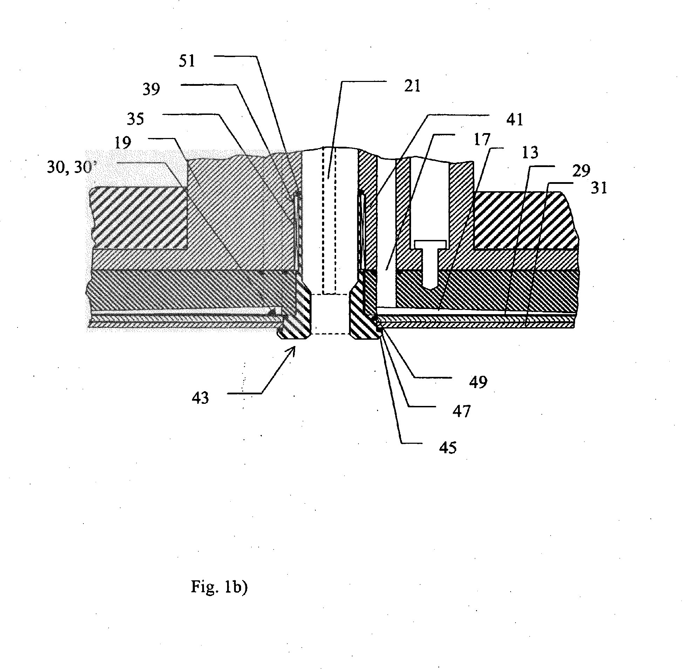

Figure 1 shows schematically an embodiment of a prior art chromatography column 1 (Chromaflow™, marketed by Amersham Pharmacia Biotech, Uppsala, Sweden). In this example the two ends of the column are substantially identical and either end can be used as the inlet end while the other end is used as the outlet end. For the sake of convenience and clarity of description, it will be assumed that the upper end of the column is the inlet end while the bottom end is the outlet end. Column 1 has a cylindrical wall 3 that has an end plate 5, 5' mounted on it at, respectively, the upper end 6 and the lower end 6' and these are held in place by external longitudinal threaded tie bars 7 with tensioning nuts 9. The space bounded by the wall 3 and end plates 5, 5' is intended to contain a bed medium (not shown). Each end plate 5, 5' supports a distributor cell 11, 11' on its side facing into the column 1. Each distributor cell 11, 11' has mobile phase distributing means, for example radially extending ribs 13, 13', for evenly distributing the mobile phase over the cross-section of the column 1 at the inlet end 6, and evenly collecting the mobile phase at the outlet end 6' from the cross-section of the column 1. The mobile phase is supplied to the column 1 via a mobile phase inlet 15 which is connected to longitudinal inlet bores 17 that open out onto the distributor cell 11. Longitudinal bores 17 are formed in a valve block 19 mounted centrally on end plate 5. The mobile phase collected by the distributing means 13' is fed out of the column 1 via longitudinal outlet bores 17' that lead to a mobile phase outlet 15'. These longitudinal bores 17' are formed in a valve block 19' mounted centrally on end plate 5'.

Each valve block 19, 19' has a central through hole 21, 21' which accommodates a longitudinally movable hollow nozzle 23, 23' that can be used to inject slurry or cleaning fluid into the column. The though holes 21, 21' open out into the interior of the column. Nozzle 23 is supported in a coupling block 25 mounted on valve block 19, while nozzle 23' is similarly mounted in a coupling block 25' mounted on valve block 19'. Central through holes 21,21' are each connected to a respective waste slurry outlet port 27, 27' in coupling blocks 25, resp. 25'.

Each end 6, 6' of the column is provided with a circular net 29, 29' that can be held against the respective distributor cell 11, 11' by a circular perforated bed support 31,31'. Each net 29, 29' and bed support has a central hole 30, 30', 30", 30"' with a diameter Dₘᵢₙ which is greater than the narrowest diameter D_{central} of central through holes 21, 21'.The nets 29, 29' and bed supports 31, 31' are clamped around their outer circumferences Pₒᵤₜₑᵣ between wall 3 and end plates 5, 5'. Sealing means such as O-rings 33 are provided to reduce leakage around the sides of the nets 29, 29' and bed supports 31, 31'. Nets 29, 29' and bed supports 31, 31' are each held against their respective distributor cell 11, 11' by their inner circumferences Pᵢₙₙₑᵣ by a means for retaining a net in the form of a central, flanged tubular sleeve 35, 35'. Each sleeve has an external thread 37, 37' on an outer end 39, 39' which co-operates with an internal thread 41, 41' in central through holes 21, 21'. The inner end 43, 43' of each sleeve 35, 35' has a flange 45, 45' which has an outside diameter Dₘₐₓ that is greater than the diameter of the central holes 30-30"' in the nets 29, 29' and bed supports 31, 31' and it is these flanges 45, 45' that hold the nets 29, 29' against their respective distributor cells 11, 11'.

As can be seen in figure 1b), sealing means such as O-rings or gaskets 47, 49, 51 are provided to prevent leakage between the tubular sleeve 35 and the net 29, bed support 31 and valve block 19.

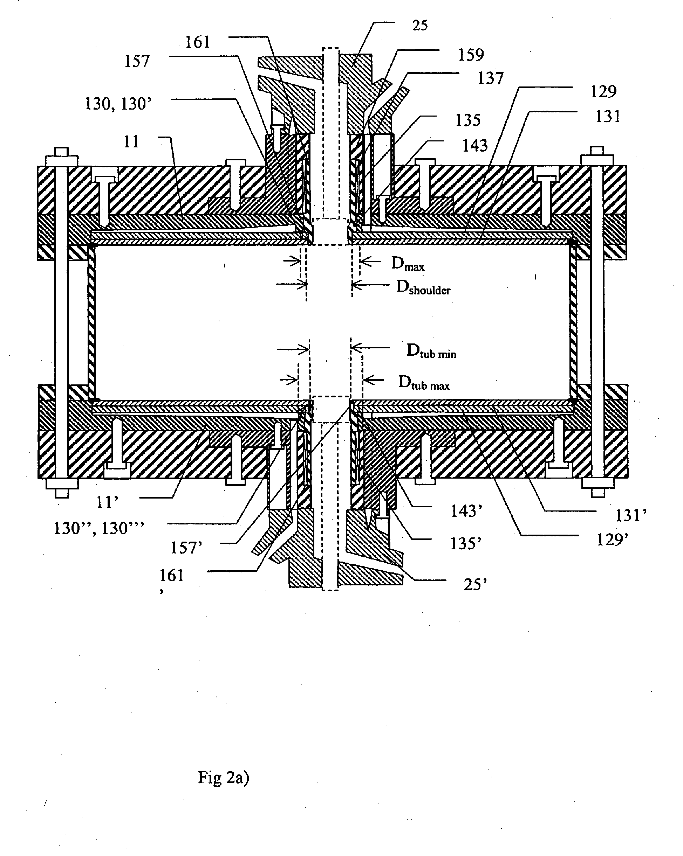

Figures 2a) and 2b) show an embodiment of a net mounting in accordance with the present invention, wherein the same reference numbers as used in respect to figures 1a) and 1b) are used for corresponding components in Figures 2a) and 2b). In accordance with the present invention, instead of using a flanged tubular sleeve to hold the nets in place, a means for retaining a net by its inner circumference comprises a stepped sleeve 135, 135'. In a preferred embodiment of the invention the inner end 143, 143' of each sleeve is provided with a locating shoulder 157, 157' that has a diameter D_{shoulder} that is less than the outer diameter Dₘₐₓ of the rest of the sleeve 135, 135' and which is substantially the same as the diameter of the central holes 130-130"' in the nets 129, 129' and bed supports 131, 131'. The sleeves 135, 135' are made of a material which is compatible with the material of nets 129, 129' and bed support 131, 131' and they are joined together by welding. This has the advantage that the molten weld material flows into any gaps, such as pores in the nets 129, 129', between the sleeves 135, 135' and the nets 129, 129', and when it solidifies it seals these gaps, thereby preventing fluid or bed media from leaking past the sleeves 135, 135'. This avoids the use of O-rings or gaskets which leads to improved reliability and makes mounting the device easier. Thus the means for retaining the net also act as means for sealing the inner circumference of the net. In order to enable the valve block to be easily removed the stepped sleeves 135, 135' are not screwed directly into the valve block but instead they are screwed into separate retaining means such as tubular sleeves 159, 159' which are held in place by the valve block but which are free to rotate with respect to the valve block. In this case the stepped sleeves 135, 135' can be provided with an external threaded portion 137, 137' which co-operates with an internal threaded portion 161, 161' in the tubular sleeve 159, 159', or vice versa. The tubular sleeves 159, 159' have an outside diameter D_{tub max} which is greater than the diameter of the through holes 121, 121'extending through the end plates 11. The tubular sleeves 159, 159' have an inside diameter D_{tub min} which is less than the diameter of the though holes 121, 121' extending through the end plates 11. The stepped sleeves 135, 135' have an outside diameter which is less than the diameter of the through holes 121, 121' extending through the end plates 5, 5', and which has a threaded portion which can co-operate with the threaded portion of the tubular sleeves 159, 159'. The stepped sleeves 135, 135' can project up outwards through the through holes 121, 121' in the end plates 5, 5' and have a tubular sleeve 159, 159' threaded onto them. Each tubular sleeve 159, 159' can then be rotated so that it travels along the thread on its respective stepped sleeve 135, 135' until the bottom edge of the tubular sleeve 159, 159' comes into contact with the end plate 5, 5'. The tubular sleeve 159, 159' can then be tightened against the end plate 5, 5' in order to pull the net 129, 129' against the distributor cell 11, 11' and end plate 5, 5' with the force necessary to ensure good operation of the column 1. The stepped sleeves 135, 135' can be prevented from rotating when the tubular sleeve 159, 159' is being tightened by the outer circumference Pₒᵤₜₑᵣ being clamped between wall 3 and end plates 5, 5'.

The tubular sleeve is preferably made from a material, or has threads made from a material, that can be threaded onto the stepped sleeve without galling and without the use of any lubricating substance in order to avoid introducing contaminants into the column. It may therefore be made of a polymer such as PEEK, Teflon ® of the like.

These tubular sleeves 159, 159' are retained in central openings 121, 121' in the valve blocks and when the column is assembled they may be clamped in the longitudinal direction between the end plates 11, 11' and the coupling blocks 25, 25' in order to prevent loosening during service.

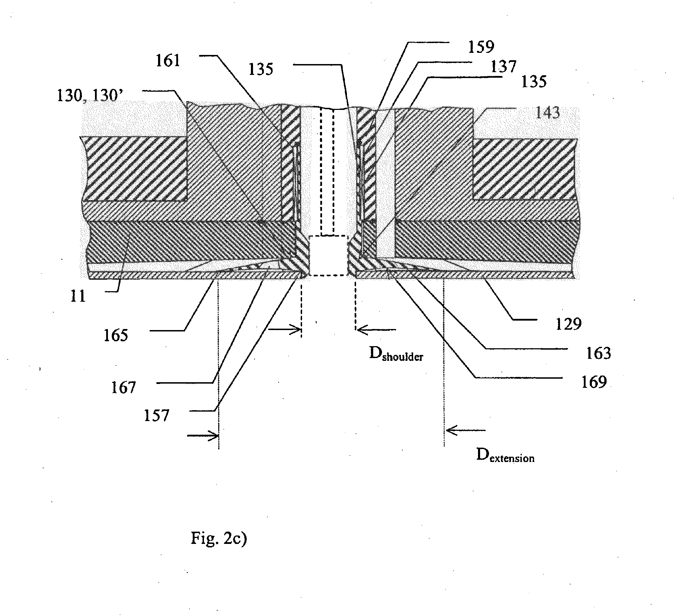

Figure 2c) shows a second embodiment of a means for retaining a net 135 which also has net supporting means 163 for supporting the net 129 at a distance intermediate its inner and outer circumferences. The net supporting means comprises a saucer shaped (or domed) flange 163 which extends a distance Dₑₓₜₑₙₛᵢₒₙ from the centre of the net 129 and which is welded, or by some other means, joined to the net around its circumference. As flange 163 is domed, it is substantially only in contact with the net at its circumference and a space 169 is left between the side of the flange 163 facing the net and the net 129. At least one through hole 167 is arranged in the flange 163 to allow fluid to pass though the net under the flange, thereby maximising the usable area of the net.

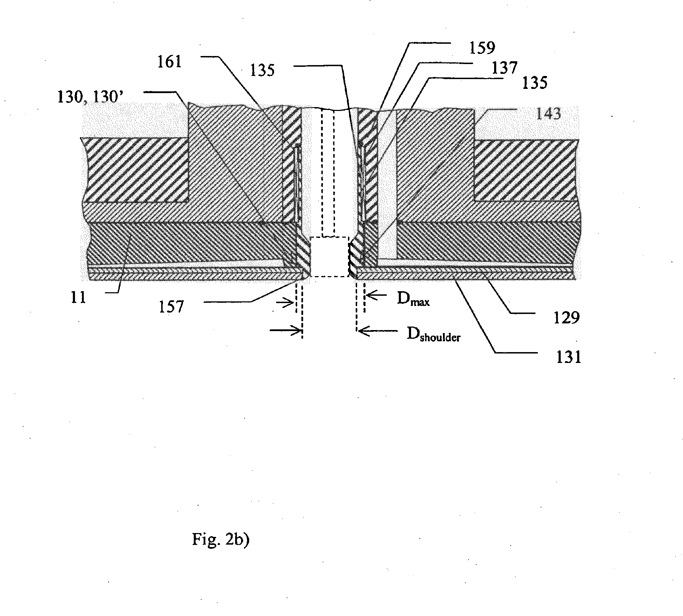

A comparison between figures 1 and 2 shows that with the present invention the surface area of the column which is blocked by means for retaining a net is considerably smaller than that covered by the flange used in the prior art method. This leads to better column performance. Additionally, there are no seals between the net and the net support in the present invention, as the joining of the net to the net support automatically seals this region and therefore the risk of leaks at this region is eliminated.

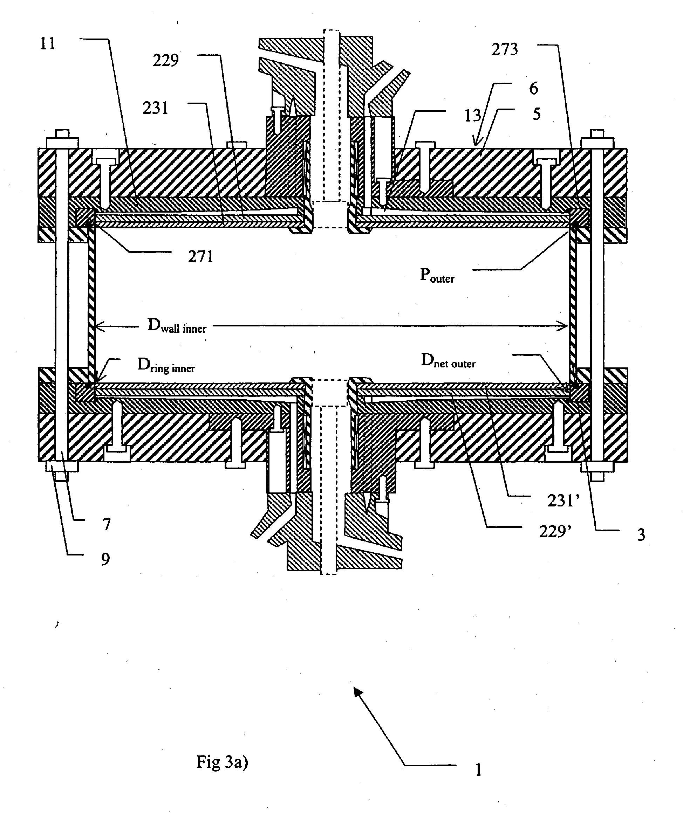

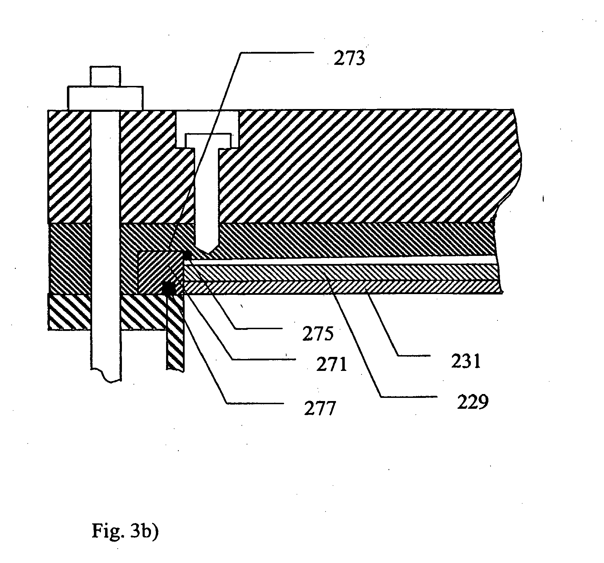

Figures 3a) and 3b) show an embodiment which is not in accordance with the present invention, in which the outer circumference Pₒᵤₜₑᵣ of each of the nets 229, 229' have means for retaining a net at its outer circumference 271. In this embodiment, the means for retaining the net 271 comprises a ring 271, of material integrally joined to the outer circumference Pₒᵤₜₑᵣ of the net. Preferably each ring is made of the same material as the net that it is joined to and the joining is performed by welding, or by the ring and net being formed in one piece, so that the risk of leakage between the net and ring is eliminated. Preferably the ring 271 has an inner diameter D_{ring inner} which is substantially the same as the outer diameter of the net D_{net outer} and the inner diameter of the wall D_{wall inner} so that the net extends across the whole internal diameter of the column, thereby maximising the area used for distributing or collecting fluid. The ring 271 is clamped, or attached in any other suitable way, between the ends of the wall 3 and an appropriately sized and positioned annular groove 273 formed in the distributor cell 11,. Suitable sealing means such as O-rings or gaskets 275,277, are provided between the contact surfaces of the ring 271 and the distributor cell 11, and the ring and the end of the wall 3. As these surfaces can easily be made substantially smooth, leakage at the outer circumference of the net can be easily avoided. It should be noted that the present invention is also applicable to columns with non-circular cross-sections, e.g. square or rectangle cross sections, and therefore the term "ring" is not intended to be limited to circular means for retaining a net but is also intended to include means for retaining a net having other shapes e.g. square, rectangular etc.

While in the preferred embodiment of the ring the ring has an inner diameter which is substantially the same as the outer diameter of the net, it is conceivable that the ring has an inner diameter which is less than the outer diameter of the net and that the ring is attached to a top or bottom surface of the ring instead of being attached to the circular inner surface of the ring.

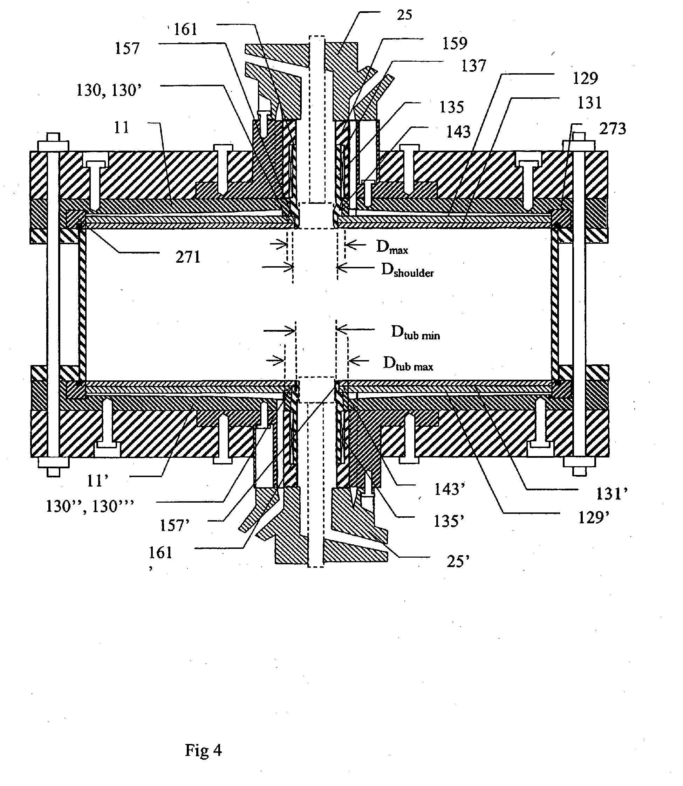

In a further embodiment of the present invention, shown in figure 4, a net is provided with a central means for retaining a net of the type described in connect with figures 2a) and 2b) as well as a peripheral means for retaining a net of the type described in connection with figures 3a) and 3b).

The present invention is not limited to use with metal nets and metal means for retaining a net welded together but is also applicable to plastic nets and plastic means for retaining a net that may also be welded together. While the invention has been illustrated by the use of welding to join the net and means for supporting the net together it is also conceivable to use any other inherently leak-proof means of joining the net and means for retaining a net such as soldering, brazing, gluing or the like, although welding is the preferred method as it does not introduce any impurities or unwanted substances into the column. It is also conceivable that the nets and means for retaining a net may be formed integrally, for example, by being cast, sintered or moulded in one piece.

Additionally, it is conceivable that the means for retaining a net is not integrally joined to the net but is instead integrally joined to a bed support that also supports a net. It is also conceivable that both the bed support and the net are integrally joined to the means for retaining a net.

The above mentioned embodiments are intended to illustrate the present invention and are not intended to limit the scope of protection claimed by the following claims.

## Claims

1. Chromatography column comprising:
- a distributor cell (11, 11') with a through hole;
- a valve block on one side of the distributor cell, with a through hole;
- a bed support and/or net (131. 131', 129, 129') on the other side of the distributor cell;
- a means (135, 135') for retaining said bed support and/or net; and
- a retaining means (159, 159') held in place by the valve block but being free to rotate with respect to said valve block;
wherein said means (135, 135') for retaining the bed support and/or net comprises:
- a sleeve with an inner end integrally joined to the bed support and/or net;
- a tubular portion passing through said through hole in the distributor cell, and
- an outer end screwed into said retaining means (159, 159').

2. Chromatography column in accordance with claim 1, **characterised in that** said bed support and/or net is welded to said means for retaining a net (135, 135').

3. Chromatography column in accordance with claim 1 or 2, **characterised in that** said retaining means comprise a sleeve (159) with an outer diameter greater than the diameter of said through hole in said distributor cell (11, 11').

4. Chromatography column in accordance with any of the previous claims **characterised in that** it comprises additional means for retaining a net comprising a ring (271) attached to or near to the outer circumference of the bed support and/or net (229, 229').

5. Chromatography column in accordance with any of the previous claims, **characterised in that** said means for retaining a net comprises a sleeve (135) with a surface adapted to be integrally joined to a net by the inner circumference of the net.

6. Chromatography column in accordance with any of the previous claims, **characterised in that** said means for retaining a net comprises a flange (163) adapted to be joined to a net at a distance from the inner circumference of the net.

7. Chromatography column in accordance with claim 6 **characterised in that** said flange (163) is domed and is provided with at least one through hole (167).

## Patentansprüche

1. Chromatographiesäule umfassend:
- eine Verteilerzelle (11, 11') mit einem Durchgangsloch;
- einen Ventilblock auf einer Seite der Verteilerzelle, mit einem Durchgangsloch;
- eine Bettauflage und/oder ein Netz (131, 131', 129, 129') auf der anderen Seite der Verteilerzelle;
- ein Mittel (135, 135') zum Halten der Bettauflage und/oder des Netzes; und
- ein Halterungsmittel (159, 159'), das durch den Ventilblock an Stelle gehalten wird, aber in Bezug auf den Ventilblock frei drehbar ist;
wobei das Mittel (135, 135') zum Halten der Bettauflage und/oder des Netzes umfasst:
- eine Hülse mit einem inneren Ende, das einstückig mit der Bettauflage und/oder dem Netz verbunden ist;
- einen röhrenförmigen Abschnitt, der durch das Durchgangsloch in der Verteilerzelle verläuft,
und
- ein äußeres Ende, das in das Halterungsmittel (159, 159') geschraubt ist.

2. Chromatographiesäule gemäß Anspruch 1, **dadurch gekennzeichnet, dass** die Bettauflage und/oder das Netz an das Mittel zum Halten eines Netzes (135, 135') geschweißt ist.

3. Chromatographiesäule gemäß Anspruch 1 oder 2, **dadurch gekennzeichnet, dass** das Halterungsmittel eine Hülse (159) mit einem Außendurchmesser, der größer als der Durchmesser des Durchgangsloch in der Verteilerzelle (11, 11') ist, umfasst.

4. Chromatographiesäule gemäß einem der vorangehenden Ansprüche, **dadurch gekennzeichnet, dass** sie zusätzliche Mittel zum Halten eines Netzes umfasst, umfassend einen Ring (271), der an dem äußeren Umfang oder nahe des äußeren Umfangs der Bettauflage und/oder des Netzes (229, 229') befestigt ist.

5. Chromatographiesäule gemäß einem der vorangehenden Ansprüche, **dadurch gekennzeichnet, dass** das Mittel zum Halten eines Netzes eine Hülse (135) mit einer Oberfläche umfasst, die dazu ausgebildet ist, einstückig durch den inneren Umfang eines Netzes mit dem Netz verbunden zu sein.

6. Chromatographiesäule gemäß einem der vorangehenden Ansprüche, **dadurch gekennzeichnet, dass** das Mittel zum Halten eines Netzes einen Flansch (163) umfasst, der dazu ausgebildet ist, mit einem Netz mit Abstand zum inneren Umfang des Netzes verbunden zu sein.

7. Chromatographiesäule gemäß Anspruch 6, **dadurch gekennzeichnet, dass** der Flansch (163) gewölbt ist und mit zumindest einem Durchgangsloch (167) versehen ist.

## Revendications

1. Colonne de chromatographie comprenant :
- une cellule de distributeur (11, 11') avec un trou traversant ;
- un bloc de distribution sur un côté de la cellule de distributeur, avec un trou traversant ;
- un support et/ou filet de lit (131. 131', 129, 129') de l'autre côté de la cellule de distributeur ;
- un moyen (135, 135') pour retenir ledit support et/ou filet de lit ; et
- un moyen de retenue (159, 159') maintenu en place par le bloc de distribution, mais étant libre de tourner par rapport audit bloc de distribution ;
dans laquelle ledit moyen (135, 135') pour retenir le support et/ou filet de lit comprend :
- un manchon avec une extrémité intérieure jointe d'un seul tenant au support et/ou filet de lit ;
- une partie tubulaire passant à travers ledit trou traversant dans la cellule de distributeur, et
- une extrémité extérieure vissée dans ledit moyen de retenue (159, 159').

2. Colonne de chromatographie selon la revendication 1, **caractérisée en ce que** ledit support et/ou filet de lit est soudé audit moyen pour retenir un filet (135, 135').

3. Colonne de chromatographie selon la revendication 1 ou 2, **caractérisée en ce que** ledit moyen de retenue comprend un manchon (159) avec un diamètre extérieur plus grand que le diamètre dudit trou traversant dans ladite cellule de distributeur (11, 11').

4. Colonne de chromatographie selon l'une quelconque des revendications précédentes, **caractérisée en ce qu'**elle comprend un moyen supplémentaire pour retenir un filet comprenant un anneau (271) attaché à ou proche de la circonférence extérieure du support et/ou filet de lit (229, 229').

5. Colonne de chromatographie selon n'importe laquelle des revendications précédentes, **caractérisée en ce que** ledit moyen pour retenir un filet comprend un manchon (135) avec une surface conçue pour être jointe d'un seul tenant à un filet par la circonférence intérieure du filet.

6. Colonne de chromatographie selon n'importe laquelle des revendications précédentes, **caractérisée en ce que** ledit moyen pour retenir un filet comprend une bride (163) conçue pour être jointe à un filet à une certaine distance de la circonférence intérieure du filet.

7. Colonne de chromatographie selon la revendication 6, **caractérisée en ce que** ladite bride (163) est en forme de dôme et est munie d'au moins un trou traversant (167).
